# EUROPEAN PATENT APPLICATION

(11) **EP 1 564 324 A1**
(43) Date of publication of application: **17.08.2005**
(21) Application number: 04100491.2
(22) Date of filing: 10.02.2004
(51) Int. Cl.: D06F 58/08

(54) **Variable speed low-noise household clothes drying machine**

(71) Applicant: Electrolux Home Products Corporation N.V., 1930 Zaventem (BE)
(72) Inventor: Cimetta, Silvano, 33100 Treviso (IT); Noviello, Flavio, 33081 Aviano (IT)
(74) Representative: Giugni, Valter

(57) **Abstract**

Laundry drying machine comprising a rotating drum (1), an electric motor (2) with an output shaft, a leading belt (4) engaged on the perimeter of said drum, a leading pulley (5) able to pass the rotation motion to said leading belt, two separate fans (21,22) keyed on the opposite heads (3A,3B) of said output shaft, and provided with means for the detection and the speed control of said electric motor, which means comprising: a rotating auxiliary shaft (7) and a rotating speed sensor (11) mounted on an open head of said auxiliary shaft, a driving pulley (9) keyed on said motor shaft, an auxiliary pulley (8) keyed on said auxiliary rotating shaft (7), a driving belt (10) connecting said driving pulley (9) to said auxiliary pulley (8), and a leading pulley (5) keyed on said auxiliary shaft (7).

## Description

The instant invention refers to a kind of drying machine, preferably of a household type, showing a particularly silent working, especially in the night time.- Even if the following description is referred to a condenser drying machine, (that are particularly advantaged by the invention), this patent application is not limited to this kind of machines but applies to any kind of drying machines.-

Largely known in the art is the general requirement for the noise generated by household appliances in their operation to be reduced as much as possible; in a typical use such appliances are made to work during the evening and night time, i. e. during a time when the produced and emitted noise is particularly sensed and so annoying.
Also largely known in the art is the fact that the noise generated by condenser-type clothes washing machines during their operation is perceived as being particularly high, since the noise generated by the normal and typical operation of the motor used to drive the rotation drum of the machine, as well as the fan used to circulate the drying air, is aggravated by the additional noise generated by the flow of cooling air to and from the condenser, as well as the really non-negligible blowing noise due to said air when exhausted from the machine and blown again into the room.

As a conclusion, and to sum up, the noise of a condenser drying machine is mainly generated by the various air flows.- In order to reduce such noise it is requested to reduce the speed of both the drying air and of the condensing air, and consequently it is needed to slow-down the motor rotation speed.- This fact implies also a corresponding reduction of the drum rotation speed, but this does not generally raise remarkable drying problems.

In order to reduce the drum speed in a preferred, and so in a controlled way, a sensing device is needed, which is able to detect such a speed, and that generally is a tachometer generator, or tachometer, as conventionally will be named from now on.- Such tachometer in the known washing machines is normally mounted on a head of the shaft of the motor rotor, it is a very simply and cheap component and it works in a well known way.

However in the condenser drying machines a single motor is able to drive the drum and also the two different drying and condensing fans that are normally placed on both opposite sides (heads) of the motor shaft and that protrudes from the motor; therefore no one of the two opposed heads of the motor shaft is available or accessible for mounting said tachometer.-

As a result it turns out impossible to use a tachometer connected to an head of the motor shaft, and therefore it would be requested to make up a passing-by tachometer that could be mounted on a central portion of said motor shaft.- Such a solution, that from a technical point of view seems quite simple, however is hindered by the fact that such tachometer should be remarkably more combersome and so more expensive; furthermore it is normally impossible to find out, inside a domestic drying machine, the room needed to mount such a passing-by tachometer on the motor shaft.-

It would therefore be desirable, and is actually a main purpose of the present invention, to provide a clothes drying machine operating according to the priciple of condensation of the moisture contained in the drying air, while ensuring a sensible reduction of the noise brought about by both outflows of the cooling air and of the drying air from the machine, by the implementation of a slow-down of the rotation speed of the drum and therefore of the two fans.-

Such machine shall be provided with a tachometer of a known type which could be easily associated to the motor operation and without being mounted on any of the shaft heads, which shaft being born by the motor rotor.-

According to another purpose of the present invention, this clothes drying machine should be able to be easy manufactured using existing, ready available materials and techniques, and be competitive in its construction without suffering any alteration or reduction in the performance and reliability thereof.

According to a further purpose of the present invention this clothes drying machine shall be able to operate at different frequencies of the electric power supply without any need to change the electric motor.-

According to the present inventio, these aims are reached in a condenser-type clothes machines incorporating the characteristics as recited in the appended claims and including such operating means as described below by mere way of non-limiting example with reference to the accompanying drawings, in which:

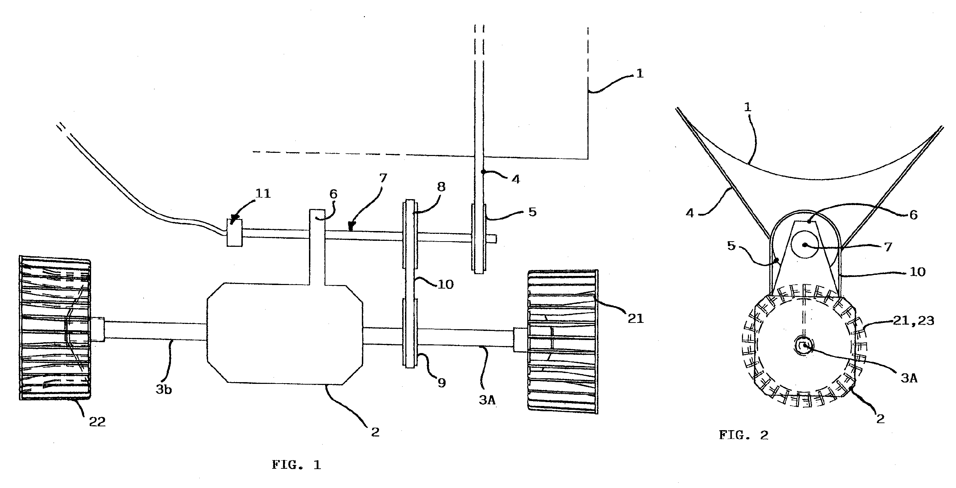

- Fig. 1 is a merely symbolic schematic view of the layout and of the functional component parts generating and transfering the rotation to the drum in a clothes drying machine according to the present invention, seen from a lateral side,
- Fig. 2 is the schematic view of the same assembly of fig. 1, seen from the front side.-

With reference to the figures a drying machine according to the invention comprehends an outer cabinet, not shown, containing in its interior:
- a drying drum 1,
- an electric motor 2,
- a related motor shaft, going out from the opposite sides by respective heads 3A, 3B,
- a leading belt 4 engaged on the cylindrical perimeter of said drum and able to drive it into rotation, and engageable on a leading pulley 5.-

Two separate fans, symbolically represented as 21 and 22, are mounted to respective said heads 3A and 3B.-

To the man skilled in the art it will be obvious that said fans are used to cause two separate forced air flows, one of which is heated and made to pass through the drum and so through the items to be dried (drying air), while the second air flow is sucked from the outside and is caused to pass in an suitable condensing device, that is crossed also by the firs air flow, in order to condensate the humidity therein contained.-

According to the invention, a bracket 6 is made and solidly placed with said motor 2, on wich an auxiliary rotating shaft 7 is engaged, that is parallel to said motor shaft 3A, 3B; of course said auxiliary shaft 7 can rotate on an axis parallel to the rotation axis of the motor shaft, and is rotatably engaged to said bracket 6 by known means, for example by a ball bearing.-

On said auxiliary shaft 7 are firmly mounted an auxiliary pulley 8 and said leading pulley 5, on which said leading belt 4, driving the drum into rotation, is engaged.

On the head 3A of the motor shaft is firmly mouted a driving pulley 9, that is suitably arranged so that it can be engaged to said auxiliary pulley 8 by a respective driving belt 10.

To sum up, the connection between the motor shaft and the drum is turned:
- from a direct connection, consisting of only one belt and only one pulley (apart the drum, obviously),
- to an indirect connection, using gear transmission means including the auxiliary shaft 7, and three pulleys, i. e. the driving pulley 9, the auxiliary pulley 8 and the leading pulley 5, and the two respective belts, i. e. the driving belt 10 and the leading belt 4.-

On an open head 7A of said auxiliary shaft 7 is then mounted the tachometer 11, that is connected by known means to the control means of said machine, that are well known and not shown.-

In such a way and in an pre-defined time it is possible to set by suitable control means, belonging to the same machine, a specific working programme, so that the machine, and so both fans, can operate at an adequately reduced motor speed, according to the invention purpose.-

Therefore such a tachometer 11, being mouted on an open head of said auxiliary shaft 7, can be of a normal type and so requiring limited size and cost; furthermore, just for that, and also as it is mounted outside the motor axis and said two fans 21, 22, it can be even easier mounted and lodged, and finally it permits the direct control of the motor speed (and of the two fans), attaining the final result of a remarkable reduction of the emitted noise.-

The described invention offers a further improved use; as a matter of facts it has to be remembered that in a number of nations, for example in USA, in Korea, in Brazil etc. the electric voltage is supplied at 60 Hz instead that at 50 Hz, as in Europe.-

If normal drying machines are exported in said countries, it would be mandatory to modify some constructional and design features and especially the motor has to be replaced, or the pulley driving ratio has to be modified; in any case extra costs have to be borne, particularly for the increase of the number of different additional models of drying machines, that however offer the same performance of already existing models.-

If drying machines according to the instant invention are made, such drawback is fully avoid as it will be sufficient that the same producer in the manufacturing phase, or the same user when selecting the working programm,would set the suitable programm, and
consequently the requested drum speed; then the machine control means can output exactly the selected drum speed and fans speed indipendently on the motor type or on the power supply frequency, based only on the output speed of said auxiliary 7, detected by said tachometer 11, which exactly corresponds to the final rotational speed of said drum.

## Claims

1. Laundry drying machine comprising:
- a rotating drum (1),
- an electric motor (2) having a respective output shaft,
- a leading belt (4) engaged on the perimeter of said drum,
- a leading pulley (5) able to pass the rotation motion to said leading belt (4),
- two fans (21, 22) apt to blow respective forced air flows into respective separate conduits, said fans being keyed on the two opposite heads (3A, 3B) of said output shaft of said electric motor, **characterized in that** it is provided with means for the detection and the speed control of said electric motor, which means comprising:
- a rotating auxiliary shaft (7) whose speed depends on the rotating speed of said output shaft of said electric motor,
- a rotating speed sensor (11), preferably a tachometer generator, mounted on a open head (7A) of said auxiliary shaft (7).-

2. Machine according to claim 1, **characterized in that** said means are also comprising:
- a driving pulley (9) keyed on said motor shaft,
- an auxiliary pulley (8) keyed on said auxiliary rotating shaft (7),
- a driving belt (10) connecting said driving pulley to said auxiliary pulley (8),
- a leading pulley (5) keyed on said auxiliary shaft (7).

3. Machine according to one of the preceding claims, **characterized in that** a rigid member (6) is provided which connects said motor (2) to said auxiliary shaft (7).
